# EUROPÄISCHE PATENTSCHRIFT

(11) **EP 2 642 625 B1**
(45) Veröffentlichungstag und Bekanntmachung des Hinweises auf die Patenterteilung: **14.09.2016**
(21) Anmeldenummer: 13160203.9
(22) Anmeldetag: 20.03.2013
(51) Int. Cl.: H02G 3/30

(54) **Mehrzweck-Kabelhalter**
Multi-purpose cable holder
Support de câbles multi-usages

(30) Priorität: 23.03.2012 DE 102012204723
(43) Veröffentlichungstag der Anmeldung: 25.09.2013
(73) Patentinhaber: Bombardier Transportation GmbH, 10785 Berlin (DE)
(72) Erfinder: Zaun, Norbert, 34289 Zierenberg (DE); Krönke, Marko, Kingston, Ontario K7P 2K1 (CA)
(74) Vertreter: Beyer, Andreas

(56) Entgegenhaltungen:
- EP-A1- 2 337 175
- DE-B3-102008 060 843
- FR-A1- 2 932 322

## Beschreibung

Die vorliegende Erfindung betrifft ein Kabelhalter zur Montage an einem Lochblech, ein Verfahren zur Befestigung eines solchen Kabelhalters sowie Verfahren zur Befestigung eines Kabels an einem Lochblech, bei denen der Kabelhalter eingesetzt wird.

Bei der Kabelbaumfertigung für Lokomotiven oder Triebköpfe werden Kabel in Seitenwänden in einer vertikalen Lage montiert. Die Kabel gehen zu unterschiedlichen Systemen des Fahrzeugs und sie werden in unterschiedliche Kategorien eingeteilt, wie beispielsweise Leistungskabel, Daten- und Steuerungskabel, die teilweise voneinander abgeschirmt werden müssen.

Kabel können beispielsweise an Lochblechen montiert werden. Beispielsweise können Kabel direkt mit Kabelbindern an Lochblechen montiert werden, wobei der Kabelbinder durch zwei Löcher des Lochblechs geführt wird. Diese Art der Montage erfordert einen relativ hohen manuellen Aufwand, da die Kabelbinder an geeigneten Stellen von beiden Seiten durch das Lochblech geführt werden müssen. Für gewöhnlich kann hierbei nur ein Kabel mit dem Kabelbinder auf ein Mal befestigt werden.

DE 20 2010 015 367 U1 beschreibt einen Kabelhalter, der als einstückiges Element mit einer an einem Grundkörper angeformten Grundplatte, einem in den Grundkörper geformten Auflagebereich für Kabel sowie wenigstens einer als Kabelbinder ausgeführten, am Grundkörper angebrachten Fixiereinrichtung ausgebildet ist. Der Kabelhalter kann auf seiner Grundplatte mit wenigstens einer Vorrichtung ausgerüstet sein, insbesondere einer Bohrung, mit welcher der Kabelhalter an einem Objekt befestigbar ist. Mittels der Bohrung kann der Kabelhalter der DE 20 2010 015 367 U1 mit einem Objekt beispielsweise verschraubt oder vernietet werden, was immer noch einen erhöhten manuellen Aufwand zur Befestigung zur Folge hat.

Die EP 2337175 offenbart einen Kabelhalter nach dem Oberbegriff des Anspruchs 1.

Aufgabe der Erfindung ist es, einen Kabelhalter bereitzustellen, der auf einfache Weise an einem Lochblech montiert werden kann. Insbesondere soll der Kabelhalter eine einfache und schnelle Montage von Kabeln oder Kabelbündeln an Lochblechen ermöglichen.

Angegeben wird von der Erfindung ein Kabelhalter nach Anspruch 1.

Der erfindungsgemäße Kabelhalter ermöglicht eine wesentliche Vereinfachung und schnellere Montage von Kabeln an Lochblechen. Der Kabelhalter ist von einer Seite an einem Lochblech anbringbar, indem das Konterelement durch ein Loch des Lochblechs hindurchgeführt wird und anschließend der Kabelhalter relativ zu dem Lochblech verschoben oder verdreht wird, sodass das Lochblech mit dem Rand des Loches in die Spalte eingreift. Dadurch wird eine kraftschlüssige und formschlüssige Verbindung zwischen Kabelhalter und Lochblech gebildet und der Kabelhalter an das Lochblech angeklemmt. Im montierten Zustand ist der Kabelauflagekörper auf einer ersten Seite des Lochblechs angeordnet und das Konterelement ist auf einer der ersten Seite gegenüber liegenden Seite des Lochblechs angeordnet.

Das Verbindungselement verbindet Kabelauflagekörper und Konterelement fix zueinander bzw. fest miteinander, was bedeutet, dass Kabelauflagekörper und Konterelement nicht gegeneinander verdrehbar oder verschiebbar sind. Der Kabelhalter kann als einstückiges Element ausgeführt sein. In einer anderen Variante ist der Kabelhalter aus mehreren Elementen zusammengesetzt, die zum Beispiel formschlüssig miteinander verbunden sind, beispielsweise durch eine Rast- oder Steckverbindung. Beispielsweise können bei dieser Variante das Konterelement und das Verbindungselement einstückig ausgeführt sein und mittels einer Steckverbindung mit dem Kabelauflagekörper verbunden sein.

Der Kabelhalter, oder Elemente davon, kann aus Kunststoff gefertigt sein, vorzugsweise aus einem verstärkten und/oder hitzebeständigen Kunststoff. Beispielhafte Kunststoffe sind Polyolefine, wie Polyethylen und Polypropylen, und Polyamid.

Die Herstellung des Kabelhalters, oder von Elementen davon, kann mittels Spritzgießen, 3-D-Druck oder Ausfräsen aus einem Rohling erfolgen, ohne dass die Herstellung auf solche Verfahren beschränkt ist.

In einer Ausführungsform des Kabelhalters ist das Konterelement plattenförmig ausgebildet. Insbesondere weist das Konterelement ein Länge-zu-Breite-Verhältnis von größer als 1 auf. Vorzugsweise ist das Konterelement rechteckig ausgeführt.

In einer weiteren Variante ist das Verbindungselement zwischen Kabelauflagekörper und Konterelement im Querschnitt kreisförmig oder näherungsweise kreisförmig. Diese Ausführungsform ist besonders vorteilhaft, wenn der Kabelhalter durch Verdrehen an dem Lochblech befestigt werden soll. Diese Ausführungsform ist insbesondere kombinierbar mit einem Konterelement, das ein Länge-zu-Breite-Verhältnis größer 1 aufweist. Insbesondere entspricht der Durchmesser des Verbindungselements in etwa oder genau der Breite des Konterelements.

In einer Ausführungsform eines Kabelhalters weisen der Spalt oder die Spalte, der/die zwischen dem Kabelauflagekörper und dem Konterelement ausgebildet ist/sind, eine Verengungsstelle auf. Dadurch wird eine noch bessere Klemmbefestigung des Kabelhalters an einem Lochblech erzielt, weil die Klemmkraft erhöht wird. Vorzugsweise ist die Spaltbreite an der Verengungsstelle in etwa gleich groß, noch mehr bevorzugt etwas geringer als die Blechdicke des Bleches, an dem der Kabelhalter befestigt werden soll.

Für die Gestaltung der Verengungsstelle sind verschiedene Varianten denkbar. In einer Variante sind die Spalte zwischen Kabelauflagekörper und Konterelement zum Verbindungselement hin verjüngt. In dieser Variante ist die Verengungsstelle, bzw. die engste Stelle, am Ende des Spalts neben dem Verbindungselement gebildet. Die Verjüngung kann stetig oder unstetig sein. In einer weiteren Variante weisen der Kabelauflagekörper und/oder das Konterelement eine oder mehrere Ausbuchtungen, auch bezeichnet als Einwölbungen, Erhebungen oder Ausbauchungen, in Richtung Spaltmitte auf. An der Stelle einer Ausbuchtung ist der Spalt verengt. Wenn der Kabelauflagekörper und das Konterelement solche Ausbuchtungen aufweisen, dann können diese gegenüber liegend angeordnet sein, sodass der Spalt von beiden Seiten verengt wird.

Die Klemmkraft zwischen Kabelhalter und Lochblech kann durch ein Klemmelement erhöht werden, mit dem eine Zugkraft zwischen dem Kabelauflagekörper und dem Konterelement einstellbar ist. Das Klemmelement ist insbesondere eine Schraube, welche den Kabelauflagekörper, das Verbindungselement und das Konterelement durchdringt.

Der Kabelauflagekörper weist Befestigungsstellen für einen Kabelbinder auf. Der Kabelauflagekörper weist als Befestigungsstellen Ausnehmungen auf, durch die ein Kabelbinder geführt werden kann. Der Kabelauflagekörper weist Ausnehmungen an mehreren Stellen seiner Oberfläche auf, durch die Kabelbinder geführt werden können, sodass an mehreren Oberflächenstellen des Kabelauflagekörpers Kabel befestigt werden können. Ausnehmungen können paarweise vorgesehen sein, wobei durch eine der Ausnehmungen ein Kabelbinder eingeführt werden kann und durch eine andere Ausnehmung der Kabelbinder wieder ausgeführt werden kann. Es kann beispielsweise eine Ausnehmung an einer Stelle der Oberfläche zur Einführung des Kabelbinders vorgesehen sein kann und es kann eine weitere Ausnehmung an einer anderen Stelle der Oberfläche zur Herausführung des Kabelbinders vorgesehen sein. In einer speziellen Variante sind solche Ausnehmungen paarweise vorhanden und es ist in dem Kabelauflagekörper ein Kanal gebildet, der sich zwischen den Ausnehmungen, die Enden des Kanals bilden, erstreckt. In einer weiteren Variante sind eine oder mehrere Ausnehmungen vorgesehen, die eine Wand des Kabelauflagekörpers durchdringen. Solche durchdringende Ausnehmungen können paarweise vorgesehen bzw. einander zugeordnet sein, sodass durch eine der Ausnehmungen ein Kabelbinder eingeführt werden kann, auf einer Rückseite der Wand entlang geführt werden kann, und durch die andere Ausnehmung wieder, von der Rückseite kommend, durchgeführt werden kann. Es können mehrere Paare Ausnehmungen vorhanden sein.

Der Kabelauflagekörper ist in Form einer Spule ausgebildet. Anders ausgedrückt ist der Kabelauflagekörper als Rotationskörper ausgebildet, wobei die Oberfläche des Rotationskörpers durch Befestigungsstellen für einen Kabelbinder in Form von Ausnehmungen unterbrochen ist. Der Begriff "Spule" bezeichnet die Form, bedeutet aber nicht, dass Kabel bei Verwendung des Kabelhalters um den Spulenkörper herum gewickelt werden müssen. Vorzugsweise werden Kabel nur von einer Seite aufgelegt.

Beispielhafte Formen sind die Form eines Zylinders oder eines Konus. Die Spule weist zwei Stirnseiten auf. Eine Stirnseite ist im montieren Zustand des Kabelhalters vom Blech beabstandet und wird auch als äußere Stirnseite bezeichnet. Die zweite Stirnseite liegt an dem Blech an und wird als innere Stirnseite bezeichnet. Das Konterelement ist an der inneren Stirnseite angebracht, ebenso wie das Verbindungselement.

Der Kabelauflagekörper hat die Form einer Spule und die Spule weist zwischen den beiden Stirnseiten einen im Vergleich zu den beiden Stirnseiten verjüngten Bereich auf. Die Spule weist an den Stirnseiten Bereiche auf, die einen größeren Durchmesser haben als ein weiterer Bereich, der zwischen den Bereichen an den Stirnseiten angeordnet ist. Die Verjüngung kann von beiden Stirnseiten ausgehend stetig sein, bis eine Stelle mit dem geringsten Durchmesser erreicht ist. Eine Variante ist eine doppelt-konische Form, bei der der Kabelauflagekörper an den Stirnseiten den größten Durchmesser aufweist und sich zur Mitte hin verjüngt. Beispielsweise ist der Kabelauflagekörper als Doppelkegelstumpf ausgebildet, mit dem kleineren Radius jeweils nach innen gerichtet. Ein Mittelteil zwischen den Konen kann zylindrisch ausgebildet sein, so dass der Kabelauflagekörper aus zwei Konen und einem Zylinder zusammengesetzt ist.

Der Kabelauflagekörper in Form einer Spule ist mit mehreren Befestigungsstellen für Kabelbinder versehen, die über seine Oberfläche verteilt sind. Insbesondere sind zwei Befestigungsstellen für Kabelbinder vorhanden, die um 180° zueinander versetzt sind, oder drei Befestigungsstellen für Kabelbinder, die um jeweils 120° zueinander versetzt sind, oder vier Befestigungsstellen für Kabelbinder, die um 90° zueinander versetzt sind. Beispielsweise können bereits beschriebene Ausnehmungen oder Paare von Ausnehmungen auf diese Art und Weise auf der Oberfläche verteilt sein, also zum Beispiel zwei Paare von Ausnehmungen, die um 180° zueinander versetzt sind, drei Paare, die um 120° zueinander versetzt sind, oder vier Paare, die um 90° zueinander versetzt sind.

Der Kabelauflagekörper ist ein Hohlkörper, der Ausnehmungen als Befestigungsstellen aufweist, welche eine Wand des Kabelauflagekörpers zum Hohlraum hin durchdringen. Ausnehmungen, welche die Wand des Kabelauflagekörpers zum Hohlraum hin durchdringen, können auch als Öffnungen oder Löcher bezeichnet werden. Die Löcher sind vorzugsweise paarweise beidseitig der Verjüngungsstelle angeordnet.

Im montierten Zustand des Kabelhalters mit einem spulenförmigen Kabelauflagekörper steht die Rotationsachse des Kabelauflagekörpers senkrecht zur Ebene des Lochblechs. Bei senkrecht angeordnetem Lochblech, beispielsweise bei der Montage von Kabeln an Seitenwänden, ist somit der Kabelauflagekörper horizontal ausgerichtet und Kabel können zur Montage aufgelegt werden, ohne dass sie sofort mit einem Fixierelement, beispielsweise einem Kabelbinder, befestigt werden müssen. Mehrere Kabelhalter können an einem Lochblech montiert werden und einen Kabelweg vorgeben. Da der Kabelauflagekörper als sich zur Mitte zwischen den Stirnseiten verjüngender Rotationskörper ausgeführt ist, hat dies den Vorteil, dass ein Herunterfallen der Kabel nach dem Auflegen wirksam verhindert wird.

In einer speziellen Ausgestaltung weist der Kabelauflagekörper eine überstehende Begrenzung an einer dem Lochblech abgewandten Stirnseite auf. Die Begrenzung dient dazu, aufgelegte Kabel am Abrutschen vom Kabelauflagekörper zu hindern. Wenn der Kabelauflagekörper ein Rotationskörper ist, kann die überstehende Begrenzung im Kabelauflagekörper ausgeformt sein. In einer anderen Variante wird an der Stirnseite ein separates Begrenzungsteil angebracht, beispielsweise ein überstehendes Blech oder eine überstehende Scheibe.

In einem weiteren Aspekt betrifft die Erfindung auch ein Schienenfahrzeug, insbesondere eine Lokomotive oder einen Triebwagen, das einen Kabelhalter aufweist wie vorangehend beschrieben.

In der Erfindung wird auch ein Verfahren nach Anspruch 9 zur Befestigung eines Kabels mit einem Kabelhalter an einem Lochblech angegeben.

Bei diesem Verfahren sowie bei dem nachfolgend noch beschriebenen Verfahren zur Befestigung eines Kabels an einem Lochblech sind alle Kabelhalter einsetzbar, wie zuvor beschrieben. Weiterhin ist der erfindungsgemäße Kabelhalter insbesondere so ausgebildet, dass dieses Verfahren und die nachfolgend beschriebenen Verfahren damit durchführbar sind.

Bei dem vorangehend genannten Verfahren und bei dem nachfolgend noch genannten Verfahren sind die Form des Loches und die Form des Konterelements vorzugsweise zueinander komplementär. Insbesondere haben das Loch und das Konterelement ein Länge-zu-Breite-Verhältnis von größer als 1. Insbesondere sind das Konterelement und das Loch rechteckig geformt, wobei die Ecken abgerundet sein können. Die komplementäre Form des Loches dient zur genauen Positionierung des Kabelhalters an dem Lochblech. In einer allgemeineren Variante ist die Breite des Konterelementes auf die Breite des Loches im Lochblech abgestimmt, wobei die Länge des Loches im Lochblech länger sein kann als die Länge des Konterelements.

In einer weiteren Variante weist das Blech ein Langloch mit variierender Breite auf. Durch den breiteren Teil des Langlochs kann das Konterelement hindurchgeführt werden und anschließend wird der Kabelhalter in den schmaleren Bereichs des Langlochs verschoben und gegebenenfalls anschließend verdreht, sodass die Ränder des Langlochs in die Spalte zwischen Konterelement und Kabelauflagekörper eingreifen.

Bei vorangehend genanntem Verfahren werden ein oder mehrere Kabel auf den Kabelauflagekörper gelegt und das/die Kabel mit einem Kabelbinder an dem Kabelauflagekörper befestigt. Bei diesem Verfahren bleiben die Kabelhalter dauerhaft an dem Lochblech montiert und dienen zur Befestigung an Kabeln an dem Lochblech. Die Kabel sind nicht direkt an dem Blech befestigt, sondern über die Kabelhalter mit dem Blech verbunden.

Schließlich betrifft die Erfindung auch ein Verfahren wie in Anspruch 10 genannt, zur Befestigung eines Kabels an einem Lochblech, wobei das Konterelement durch ein Loch des Lochblechs hindurchgeführt wird bis der Kabelauflagekörper am Rand des Loches anliegt, der Kabelhalter relativ zu dem Lochblech verdreht und/oder verschoben wird, bis das Lochblech mit dem Rand des Loches in den Spalt eingreift,
ein oder mehrere Kabel auf den Kabelauflagekörper gelegt werden, das/die Kabel mit einem Kabelbinder an dem Lochblech befestigt werden und optional der Kabelhalter von dem Lochblech entfernt wird. Bei diesem Verfahren wird das Kabel dauerhaft am Lochblech selbst befestigt und nicht am Kabelhalter, der nach Verlegung der Kabel wieder entfernt werden kann. Der Kabelhalter dient in diesem Fall als wieder verwendbare Hilfsvorrichtung.

Die Erfindung wird nachfolgend anhand von Ausführungsbeispielen beschrieben.

Es zeigen:
- Fig. 1: eine perspektivische Ansicht eines erfindungsgemäßen Kabelhalters,
- Fig. 2a, 2b: seitliche Ansichten des Kabelhalters,
- Fig. 3: eine Ansicht des Kabelhalters von oben,
- Fig. 4: eine Ansicht im Schnitt des Verbindungselements und des Konterelements von oben,
- Fig. 5: ein Lochblech, an dem der erfindungsgemäße Kabelhalter befestigt werden kann,
- Fig. 6: einen am Lochblech befestigten Kabelhalter in einer seitlichen Ansicht, und
- Fig. 7: einen am Lochblech befestigten Kabelhalter in einer Ansicht von schräg oben.
- Fig. 8a, 8b: Ausschnitte aus einem Kabelhalter im Bereich sich verengender Spalte zwischen Kabelauflagekörper und Konterelement, in seitlicher Schnittansicht.

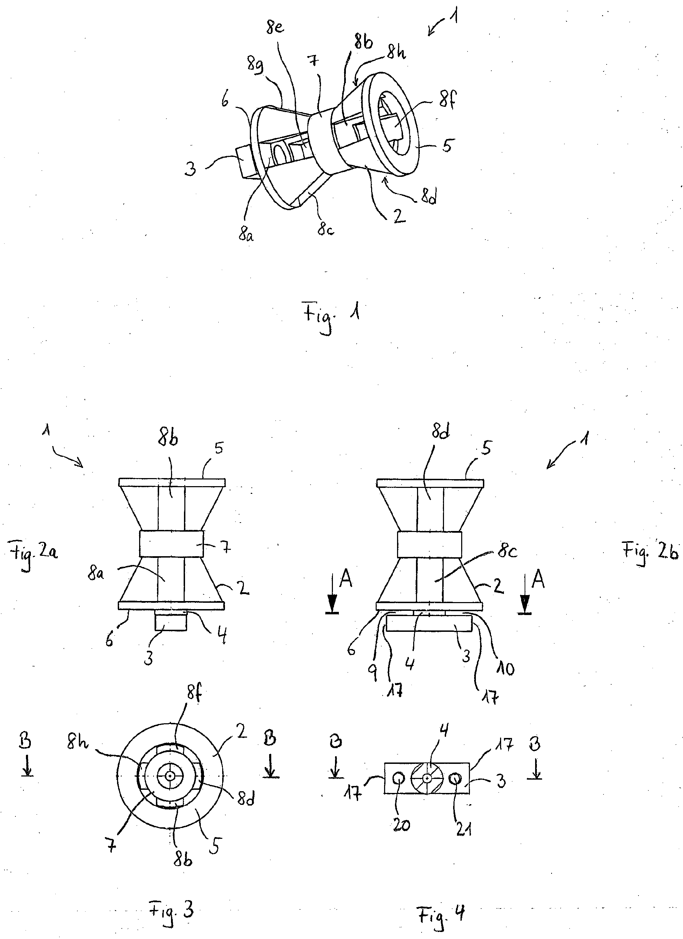

Die Fig. 1 zeigt einen Kabelhalter 1 in seitlicher perspektivischer Ansicht, mit einem Kabelauflagekörper 2 und einem Konterelement 3. Der Kabelauflagekörper 2 ist als spulenförmiger Hohlkörper ausgebildet, der sich zwischen den Stirnseiten 5 und 6 im Querschnitt verjüngt. Die stirnseitigen Abschnitte des Kabelauflagekörpers haben die Form eines innen hohlen Konus bzw. Kegelstumpfes und der mittlere, verjüngte Bereich 7 hat die Form eines Hohlzylinders. In den Seitenwänden der konischen Teile sind Öffnungen 8a, 8b, 8c, 8e, 8f und 8g vorhanden, die in der Fig. 1 abgebildet sind. Außerdem sind Öffnungen 8d (zwischen 8b und 8f) und 8h (zwischen 8b und 8f) vorhanden, die in der Fig. 1 nicht zu sehen, aber durch Pfeile in ihrer Position angedeutet sind. Die Öffnungen 8a-8h, auch bezeichnet als Ausnehmungen, sind Befestigungsstellen für Kabelbinder. Wenn beispielsweise ein Kabel von vorne auf den zylindrischen Teil 7 des Kabelauflagekörpers 2 aufgelegt ist, kann ein Kabelbinder beispielsweise durch die Öffnung 8a in den inneren Hohlraum des Kabelauflagekörpers 2 hinein und durch die Öffnung 8b wieder hinaus geführt werden und anschließend über dem Kabel geschlossen werden, wodurch das Kabel oder mehrere Kabel an dem Kabelauflagekörper 2 befestigt werden. In gleicher Art und Weise können Kabelbinder durch die Lochpaare 8c, 8d oder 8e, 8f oder 8g, 8h hindurchgeführt werden. Die Lochpaare 8a/8b, 8c/8d, 8e/8f und 8g/8h sind in den konischen Bereichen, beidseitig des verjüngten Bereiches 7 angeordnet und jeweils um 90° zueinander versetzt. Dadurch hat der Kabelauflagekörper entlang seines Umfangs an vier Stellen, die um 90° zueinander versetzt sind, Ausnehmungen, durch die jeweils ein Kabelbinder geführt werden kann. Hierdurch können Kabel an mehreren Stellen, in diesem Fall an vier Stellen, des Kabelauflagekörpers montiert werden. Es ist bei dieser Ausführungsform möglich, zwei oder mehrere Kabel oder zwei Kabelbäume parallel am gleichen Kabelauflagekörper zu montieren, indem beispielsweise ein Kabel/Kabelbaum mit einem Kabelbinder durch die Öffnungen 8a/8b befestigt wird und ein weiteres Kabel/ein weiterer Kabelbaum mit einem weiteren Kabelbinder durch die Öffnung 8e/8f auf einer gegenüberliegenden Seite des Kabelauflagekörpers befestigt wird. Werden auch noch die weiteren Öffnungen zur Befestigung von Kabeln oder Kabelbäumen verwendet, so kann eine Kreuzung mit zwei mal zwei Kabeln oder Kabelbäumen realisiert werden.

Dadurch, dass der Kabelauflagekörper 2 zwischen den Stirnseiten 5 und 6 zur Mitte hin verjüngt ausgeführt ist, können Kabel auf den mittleren Teil 7 aufgelegt werden, ohne vom Kabelauflagekörper herunterzurutschen. Zur Realisierung eines Kabelbaums können mehrere Kabel auf den mittleren Teil 7 aufgelegt werden und anschließend als ein Bündel mit einem Kabelbinder fixiert werden.

Die Fig. 2a und 2b zeigen Seitenansichten des in Fig. 1 gezeigten Kabelhalters 1. In der Fig. 2a fällt der Blick direkt auf die Öffnungen 8a und 8b, wobei hinter der Öffnung 8a die Öffnung 8e deckungsgleich angeordnet ist und hinter der Öffnung 8b die Öffnung 8f deckungsgleich angeordnet ist, sodass der Blick des Betrachters durch die Öffnungen 8a/8e und 8b/8f hindurch fällt. In analoger Weise fällt der Blick des Betrachters in der Fig. 2b auf die Öffnung 8c, hinter der deckungsgleich die Öffnung 8g angeordnet ist, und auf die Öffnung 8d, hinter der deckungsgleich die Öffnung 8h angeordnet ist. In den Fig. 2a und 2b ist das Verbindungselement 4 zwischen dem Kabelauflagekörper 2 und dem Konterelement 3 abgebildet. In der gezeigten Ausführungsform verbindet das Verbindungselement 4 das Konterelement 3 mit der unteren Stirnseite 6 des Kabelauflagekörpers 2. In der gezeigten Ausführungsform ist der Kabelhalter 1 einstückig. Alternativ könnten das Konterelement 3 und das Verbindungselement 4 ein vom Kabelauflagekörper 2 getrenntes einstückiges Teil sein, das in dem Kabelauflagekörper 2 bzw. in dessen Stirnseite 6 eingesteckt wird. Das Konterelement 3 ist relativ zum Kabelauflagekörper 2 nicht beweglich, insbesondere nicht verdrehbar, wenn es am Kabelauflagekörper 2 angebracht ist.

In der Fig. 2b sind zwei Spalte 9, 10 abgebildet, die zwischen dem Kabelauflagekörper 2 und dem Konterelement 3 auf der unteren Stirnseite 6 des Kabelauflagekörpers ausgebildet sind.

Die Fig. 3 zeigt eine Sicht auf die obere Stirnseite 5 des Kabelauflagekörpers 1 und die Öffnungen 8b, 8d, 8f und 8h im oberen Bereich des Kabelauflagekörpers 2.

Die Fig. 4 zeigt einen Schnitt entlang der Ebene A-A der Fig. 2b in einer Blickrichtung von oben (gleiche Perspektive wie bei Fig. 3). Das Verbindungselement 4 ist durchschnitten gezeigt und darunter befindet sich das damit verbundene Konterelement 3. Wie zu sehen, ist das Konterelement 3 plattenförmig ausgebildet und weist ein Länge-zu-Breite-Verhältnis von größer 1 auf. In dieser Ausführungsform beträgt das Länge-zu-Breite-Verhältnis in etwa 3:1. Das Verbindungselement 4 ist im Querschnitt kreisförmig und im Zentrum des Konterelements 3 angeordnet. Rechts von dem Verbindungselement 4 und oberhalb des Konterelements 3 befindet sich der Spalt 10 (vergleiche Fig. 2b) und links von dem Verbindungselement 4 und über dem Konterelement 3 befindet sich in der gewählten Ansicht der Spalt 9 (vergleiche Fig. 2b). Durch den kreisförmigen Querschnitt des Verbindungselements 4, das auch als Verbindungssteg bezeichnet werden kann, ist die Befestigung des Kabelhalters 1 an einem Lochblech durch eine Drehbewegung besonders gut möglich, wie anhand nachfolgender Figuren ausgeführt wird. Der Durchmesser des im Querschnitt kreisförmigen Verbindungselements 4 kann gleichgroß sein wie die Breite des Verbindungselements 3, wie in der vorliegenden Ausführungsform gezeigt. Auch dies dient der besseren Handhabung des Kabelhalters 1 bei der Befestigung an einem Lochblech. Zusätzlich zu Fig. 2a und 2b zeigt die Fig. 4 Ausbuchtungen 20, 21 auf dem Konterelement 3, welche in der Draufsicht in etwa kreisförmig sind und die als spaltseitige Erhebungen auf der Oberfläche des Konterelements 3 ausgebildet sind.

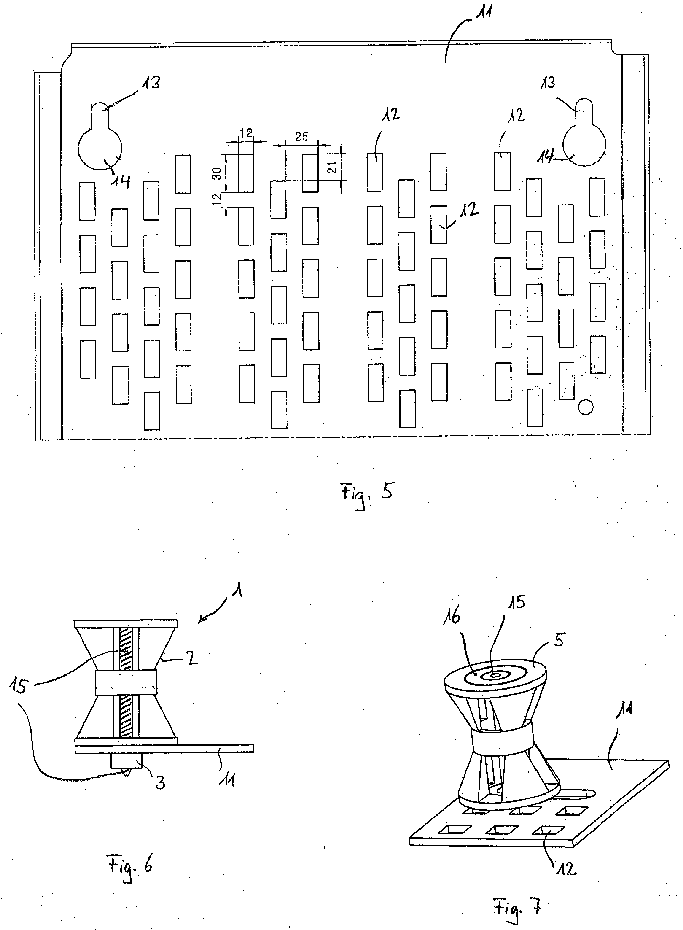

Die Fig. 5 zeigt ein Lochblech 11, an dem ein Kabelhalter, wie in den Fig. 1 bis 4 gezeigt, befestigt werden kann. Das Lochblech 11 weist eine Vielzahl rechteckig geformter Löcher 12 auf, die komplementär zu dem in den Fig. 1 bis 4 gezeigten Konterelement 3 sind, d.h. das Konterelement 3 kann passgenau in eines der Löcher 12 eingeführt werden. Das Konterelement 3 wird durch ein Loch 12 hindurchgeführt, bis der Kabelauflagekörper mit der Stirnseite 6 am Rand des Loches 12 bzw. auf der Oberfläche des Lochblechs 11 anliegt. Anschließend wird der Kabelauflagekörper 2 manuell um etwa 90° gedreht, wobei das mit dem Kabelauflagekörper 2 fix verbundene Konterelement 3 mitgedreht wird und an der dem Betrachter abgewandten Rückseite des Bleches 11 anliegt. Durch die Drehbewegung wird der Kabelhalter 1 an dem Lochblech 11 festgeklemmt und am Lochblech 11 fixiert. Mehrere Kabelhalter 1 können an verschiedenen Löchern 12 befestigt werden und einen Kabel-Verlegeweg entlang des Lochblechs 11 vorgeben.

Der Durchmesser des im Querschnitt kreisförmigen Verbindungselements 4 entspricht in etwa der Breite des Loches 12, was die Führung des Kabelhalters bei der Drehbewegung unterstützt.

Statt in eines der Löcher 12 kann der Kabelhalter 1 auch in eines der Langlöcher 13 eingeführt werden. Die Langlöcher 13 weisen an dem unteren Ende eine Aufweitung 14 auf, durch die das Konterelement 3 hindurch gesteckt werden kann, gegebenenfalls unter leichtem Ankippen des Kabelhalters. Anschließend kann das Verbindungselement 4 in den schmaleren oberen Bereich des Langlochs verschoben werden. Schließlich wird der Kabelauflagekörper 2, der mit seiner Stirnseite 6 von vorn auf der Oberfläche des Bleches 11 aufliegt, verdreht, sodass das Konterelement auf der rückwärtigen Oberfläche des Bleches 11 anliegt.

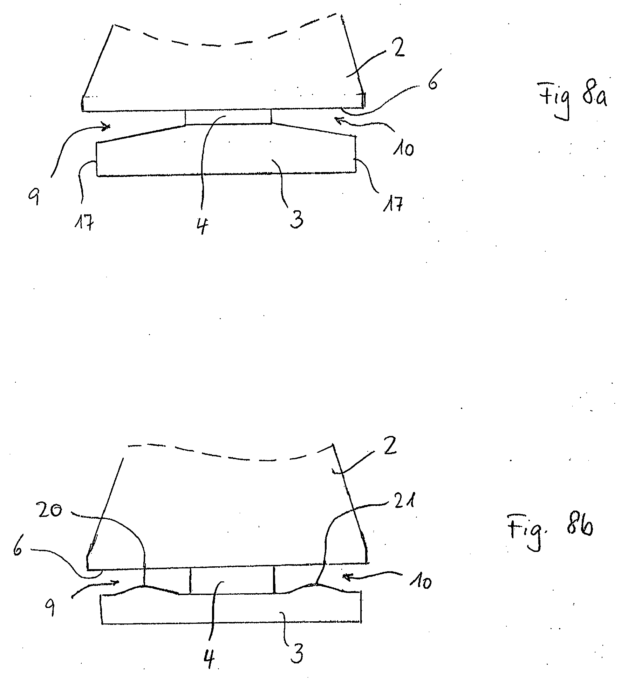

Die Breite der Spalte 9 und 10 ist auf die Dicke des Bleches 11 abgestimmt, sodass eine feste Klemmung erzielt wird. Vorzugsweise sind die Spalte 9 und 10 (siehe Fig. 2b) zum Verbindungselement 4 hin verjüngt oder bauchig/ballig ausgeführt (s. Fig 8a-b). Am Außenrand 17 des Konterelements 3 sind die Spalte 9, 10 vorzugsweise etwas breiter als die Dicke des Blechs 11, sodass das Konterelement 3 leicht verdreht werden kann, ohne am Rand des Loches 12 anzuschlagen. Zum Verbindungselement 4 hin kann sich das Spaltmaß derart verjüngen oder es ist bauchig/ballig ausgeführt, dass die Dicke des Bleches 11 erreicht oder geringfügig unterschritten wird. Dadurch wird eine besonders feste Klemmung erzielt.

In der Fig. 6 ist der am Lochblech 11 befestigte Kabelhalter 1 in einer seitlichen Ansicht gezeigt. Wie ersichtlich, steht die Längsachse des spulenförmigen Kabelauflagekörpers 2 senkrecht zur Oberfläche des Lochblechs 11 bzw. zu dem Lochblech selbst. In einer perspektivisch leicht veränderten Ansicht, von schräg oben, ist diese Anordnung auch in der Fig. 7 gezeigt. In der Fig. 6 ist erkennbar, dass bei dem befestigten Kabelhalter 1 der Kabelauflagekörper 2 auf der einen Seite des Lochblechs angeordnet ist und das Konterelement 3 auf der Rückseite des Bleches 11 angeordnet ist.

Die Fig. 6 zeigt ein zusätzliches Merkmal einer Klemmbefestigung. Eine Schraube 15 ist durch den Kabelauflagekörper 2 entlang seiner Längsachse und durch das Konterelement 3 hindurchgeführt, wobei die Schraube 15 im Kabelauflagekörper 2 im Wesentlichen von Hohlraum umgeben ist und in das Konterelement 3 hineingedreht ist und dieses durchstößt, wie an der das Konterelemente 3 durchstoßenen Spitze der Schraube 15 zu sehen.

In der Fig. 7 ist der Kopf der Schraube 15 zu sehen, der in der Stirnseite 5 des Kabelauflagekörpers 2 versenkt ist, dabei gehalten von einer Unterlegscheibe 16. Durch Anziehen der Schraube 15 wird eine Zugkraft zwischen dem Kabelauflagekörper 2 und dem Konterelement 3 erzeugt, wodurch die Klemmkraft erhöht wird.

In einer nicht gezeigten Variante wird an der Stirnseite 5 ein separates Begrenzungsteil angebracht, beispielsweise ein an der Stirnseite seitlich überstehendes Blech oder eine überstehende Scheibe. Ein solches Blech oder eine solche Scheibe kann mit Hilfe der Schraube 15 befestigt werden, indem die Schraube 15 das/die auf die Stirnseite 5 aufgelegte Blech/Scheibe durchstößt und es/sie nach Festziehen an der Stirnseite fixiert.

Die Fig. 8a und 8b zeigen Ausschnitte aus einem Kabelhalter im Bereich sich verengender Spalte 9, 10. Gezeigt ist ein Schnitt entlang der in Fig. 3 und 4 eingezeichneten Linie B-B durch den Kabelhalter. Die Fig. 8a und 8b zeigen Ausgestaltungen der Spalte 9 und 10 (vgl. Fig. 2b), bei welchen die Spalte eine Verengungsstelle aufweisen. In Fig. 8a sind die Spalte 9, 10 zum Verbindungselement 4 hin stetig verjüngt und die engste Stelle ist am Ende des Spalts neben dem Verbindungselement 4 gebildet. Zwischen dem Außenrand 17 und Verbindungselement 4 kann das Konterelement 3 spaltseitig eine beliebige andere Kontur aufweisen, die in Richtung Verbindungselement 4 den Spalt verjüngt. In Fig. 8b weist das Konterelement 3 Ausbuchtungen 20, 21 in Richtung Spaltmitte auf. Die Ausbuchtungen 20, 21 können eine beliebige Kontur haben. Die Fig. 8b zeigt einen Schnitt durch die Ausbuchtungen. In dieser Ausführungsform sind die Ausbuchtungen in der Draufsicht in etwa kreisförmig, wie in der Fig. 4 gezeigt und haben die Form eines stetig ansteigenden und wieder abfallenden "Hügels". Andere Formen wie Noppen u. ä. sind denkbar. In einer weiteren, nicht gezeigten Ausführungsform weist das Konterelement 3 Ausbuchtungen 20, 21 in Richtung Spaltmitte auf, wie in Fig. 8b gezeigt, und auch der Kabelauflagekörper 2 weist an der Stirnseite 6 Ausbuchtungen auf, die jeweils den Ausbuchtungen 20 und 21 gegenüber liegen, sodass die Spalte 9, 10 von beiden Seiten verengt sind.

## Patentansprüche

1. Kabelhalter (1) zur Montage an einem Lochblech (11),
aufweisend
- einen Kabelauflagekörper (2),
- ein Konterelement (3),
- ein Verbindungselement (4) zwischen Kabelauflagekörper (2) und Konterelement (3), über welches das Konterelement und der Kabelauflagekörper fix zueinander verbunden sind,
- einen oder mehrere Spalte (9, 10), die zwischen dem Kabelauflagekörper (2) und dem Konterelement (3) ausgebildet sind,
wobei der Kabelauflagekörper (2) Befestigungsstellen (8a, 8b, 8c, 8d, 8e, 8f, 8g, 8h) für einen Kabelbinder aufweist,
der Kabelauflagekörper (2) in Form einer Spule ausgebildet ist, die zwei Stirnseiten (5, 6) aufweist und zwischen den Stirnseiten (5, 6) einen im Vergleich zu den Stirnseiten verjüngten Bereich (7) aufweist, **dadurch gekennzeichnet, dass**
der Kabelauflagekörper ein Hohlkörper ist, der Ausnehmungen (8a, 8b, 8c, 8d, 8e, 8f, 8g, 8h) aufweist, welche die Wand des Kabelauflagekörpers (2) zum Hohlraum hin durchdringen und welche die Befestigungsstellen sind.

2. Kabelhalter nach Anspruch 1, **dadurch gekennzeichnet, dass** die Ausnehmungen (8a, 8b, 8c, 8d, 8e, 8f, 8g, 8h) paarweise beidseitig der Verjüngungsstelle angeordnet sind.

3. Kabelhalter nach einem der vorangehenden Ansprüche, **dadurch gekennzeichnet, dass** das Konterelement (3) plattenförmig ausgebildet ist.

4. Kabelhalter nach einem der vorangehenden Ansprüche, **dadurch gekennzeichnet, dass** das Konterelement (3) ein Länge zu Breite-Verhältnis größer 1 aufweist.

5. Kabelhalter nach einem der vorangehenden Ansprüche, **dadurch gekennzeichnet, dass** das Verbindungselement (4) im Querschnitt kreisförmig oder annähernd kreisförmig ist.

6. Kabelhalter nach einem der vorangehenden Ansprüche, **dadurch gekennzeichnet, dass** der Spalt/die Spalte (9, 10) eine Verengungsstelle aufweisen.

7. Kabelhalter nach einem der vorangehenden Ansprüche, **gekennzeichnet durch** ein Klemmelement (15), womit eine Zugkraft zwischen dem Kabelauflagekörper (2) und dem Konterelement (3) einstellbar ist.

8. Schienenfahrzeug, aufweisend einen Kabelhalter (1) nach einem der Ansprüche 1-7.

9. Verfahren zur Befestigung eines Kabels mit einem Kabelhalter an einem Lochblech (11), bei dem ein Kabelhalter (1) nach einem der Ansprüche 1-7 eingesetzt wird,
wobei bei dem Verfahren
- das Konterelement durch ein Loch des Lochblechs hindurchgeführt wird bis der Kabelauflagekörper (2) am Rand des Loches anliegt,
- der Kabelhalter (1) relativ zu dem Lochblech (11) verdreht und/oder verschoben wird, bis das Lochblech mit dem Rand des Loches in den Spalt eingreift,
- ein oder mehrere Kabel auf den Kabelauflagekörper (2) gelegt werden,
- das/die Kabel mit einem Kabelbinder an den Befestigungsstellen (8a, 8b, 8c, 8d, 8e, 8f, 8g, 8h) des Kabelauflagekörpers (2) befestigt werden.

10. Verfahren zur Befestigung eines Kabels an einem Lochblech, bei dem ein Kabelhalter (1) nach einem der Ansprüche 1-7 eingesetzt wird, wobei bei dem Verfahren
- das Konterelement durch ein Loch des Lochblechs hindurchgeführt wird bis der Kabelauflagekörper (2) am Rand des Loches anliegt,
- der Kabelhalter (1) relativ zu dem Lochblech (11) verdreht und/oder verschoben wird, bis das Lochblech mit dem Rand des Loches in den Spalt eingreift,
- ein oder mehrere Kabel auf den Kabelauflagekörper gelegt werden, und
- das/die Kabel mit einem Kabelbinder an dem Lochblech (11) befestigt werden und optional
- der Kabelhalter von dem Lochblech entfernt wird.

## Claims

1. A cable holder (1) for mounting on a perforated plate (11),
comprising
- a cable support body (2),
- a counter element (3),
- a connecting element ( 4 ) between cable support body ( 2 ) and counter element (3), via which the counter element and the cable support body are connected securely to one another,
- one or more gaps (9, 10 ) which are formed between the cable support body (2) and the counter element (3),
wherein the cable support body (2) comprises fastening points (8a, 8b, 8c, 8d, 8e, 8f, 8g, 8h) for a cable tie,
the cable support body (2) is designed in the form of a coil having two ends (5, 6) and between the ends (5, 6) has a section (7) that is tapered compared to the ends,
**characterized in that**
the cable support body is a hollow body having recesses (8a, 8b, 8c, 8d, 8e, 8f, 8g, 8h), which penetrate the wall of the cable support body (2) towards the hollow space and which are the fastening points.

2. The cable holder according to claim 1, **characterized in that** the recesses (8a, 8b, 8c, 8d, 8e, 8f, 8g, 8h) are arranged in pairs on both sides of the tapered section.

3. The cable holder according to one of the preceding claims, **characterized in that** the counter element (3) is designed with a plate shape.

4. The cable holder according to one of the preceding claims, **characterized in that** the counter element (3) has a length-to-width ratio of greater than 1.

5. The cable holder according to one of the preceding claims, **characterized in that** the connecting element (4) in terms of cross-section is circular or almost circular.

6. The cable holder according to one of the preceding claims, **characterized in that** the gap(s) (9, 10) exhibit(s) a tapered section.

7. The cable holder according to one of the preceding claims, **characterized by** a clamping element (15), with which a tractive force between the cable support body (2) and the counter element (3) is adjustable.

8. A rail vehicle, comprising a cable holder (1) according to one of the claims 1-7.

9. A method for fastening a cable with a cable holder on a perforated plate (11), where a cable holder (1) as claimed in one of claims 1-7 is used,
wherein with the method
- the counter element is guided through a hole in the perforated plate, until the cable support body (2) is touched on the edge of the hole,
- the cable holder (1) is twisted and/or shifted in relation to the perforated plate (11), until the perforated plate engages with the edge of the hole in the gap,
- one or more cables are placed on the cable support body (2),
- the cable(s) is/are fastened with a cable tie at the fastening points (8a, 8b, 8c, 8d, 8e, 8f, 8g, 8h) of cable support body (2).

10. A method for fastening a cable on a perforated plate (11), where a cable holder (1) as claimed in one of claims 1-7 is used,
wherein with the method
- the counter element is guided through a hole in the perforated plate, until the cable support body (2) is touched on the edge of the hole,
- the cable holder (1) is twisted and/or shifted in relation to the perforated plate (11), until the perforated plate engages with the edge of the hole in the gap,
- one or more cables are placed on the cable support body, and
- the cable(s) is/are fastened with a cable tie on the perforated plate (11) and optionally
- the cable holder is removed from the perforated plate.

## Revendications

1. Support de câbles (1) pour le montage au niveau d'une tôle perforée (11),
présentant
- un corps de réception de câbles (2),
- un élément antagoniste (3),
- un élément de liaison (4) entre le corps de réception de câbles (2) et l'élément antagoniste (3), par l'intermédiaire duquel l'élément antagoniste et le corps de réception de câbles sont reliés de manière fixe l'un par rapport à l'autre,
- une ou plusieurs fentes (9, 10), qui sont réalisées entre le corps de réception de câbles (2) et l'élément antagoniste (3),
dans lequel le corps de réception (2) présente des emplacements de fixation (8a, 8b, 8c, 8d, 8e, 8f, 8g, 8h) pour un serre-câbles,
le corps de réception de câbles (2) est réalisé sous la forme d'une bobine, qui présente deux côtés frontaux (5, 6) et qui présente, entre les côtés frontaux (5, 6), une zone (7) rétrécie en comparaison avec les côtés frontaux, **caractérisé en ce**
**que** le corps de réception de câbles est un corps creux, qui présente des évidements (8a, 8b, 8c, 8d, 8e, 8f, 8g, 8h), qui traversent la paroi du corps de réception de câbles (2) en direction de l'espace creux et qui sont les emplacements de fixation.

2. Support de câbles selon la revendication 1, **caractérisé en ce que** les évidements (8a, 8b, 8c, 8d, 8e, 8f, 8g, 8h) sont disposés par paire de part et d'autre de l'emplacement de rétrécissement.

3. Support de câbles selon l'une quelconque des revendications précédentes, **caractérisé en ce que** l'élément antagoniste (3) est réalisé de manière à présenter une forme de plaque.

4. Support de câbles selon l'une quelconque des revendications précédentes, **caractérisé en ce que** l'élément antagoniste (3) présente un rapport entre la longueur et la largeur supérieur à 1.

5. Support de câbles selon l'une quelconque des revendications précédentes, **caractérisé en ce que** l'élément de liaison (4) présente une forme circulaire ou une forme approximativement circulaire dans la section transversale.

6. Support de câbles selon l'une quelconque des revendications précédentes, **caractérisé en ce que** la fente/les fentes (9, 10) présentent un emplacement d'étranglement.

7. Support de câbles selon l'une quelconque des revendications précédentes, **caractérisé par** un élément de serrage (15), ce qui permet de régler la force de traction entre le corps de réception de câbles (2) et l'élément antagoniste (3).

8. Véhicule ferroviaire, présentant un support de câbles (1) selon l'une quelconque des revendications 1 à 7.

9. Procédé pour fixer un câble à l'aide d'un support de câbles au niveau d'une tôle perforée (11), dans le cadre duquel un support de câbles (1) selon l'une quelconque des revendications 1 à 7 est utilisé,
dans lequel dans le cadre du procédé,
- l'élément antagoniste est guidé au travers d'un trou de la tôle perforée jusqu'à ce que le corps de réception de câbles (2) repose au niveau du bord du trou,
- le support de câbles (1) est tourné et/ou glissé par rapport à la tôle perforée (11) jusqu'à ce que la tôle perforée vienne en prise par le bord du trou avec la fente,
- un ou plusieurs câbles sont placés sur le corps de réception de câbles (2),
- le/les câbles sont fixés à l'aide d'un serre-câbles au niveau des emplacements de fixation (8a, 8b, 8c, 8d, 8e, 8f, 8g, 8h) du corps de réception de câbles (2).

10. Procédé pour fixer un câble au niveau d'une tôle perforée, dans le cadre duquel un support de câbles (1) selon l'une quelconque des revendications 1 à 7 est utilisé,
dans lequel dans le cadre du procédé
- l'élément antagoniste est guidé au travers d'un trou de la tôle perforée jusqu'à ce que le corps de réception de câbles (2) repose au niveau du bord du trou,
- le support de câbles (1) est tourné et/ou glissé par rapport à la tôle perforée (11) jusqu'à ce que la tôle perforée vienne en prise par le bord du trou avec la fente,
- un ou plusieurs câbles sont posés sur le corps de réception de câbles, et
- le/les câbles sont fixés par un serre-câbles au niveau de la tôle perforée (11), et en option,
- le support de câbles est retiré de la tôle perforée.
